Europäisches Patentamt

European Patent Office

Office européen des brevets

(11) Publication number: **0 422 567 A2**

# EUROPEAN PATENT APPLICATION

(21) Application number: 90119273.2

(22) Date of filing: 08.10.90

(51) Int. Cl.⁵: **H02G 15/18, H02G 15/184, B29C 61/06**

(30) Priority: **11.10.89 IT 2197989**

(43) Date of publication of application:
**17.04.91 Bulletin 91/16**

(84) Designated Contracting States:
**DE ES FR GB**

(71) Applicant: **SOCIETA' CAVI PIRELLI S.p.A.**
**Piazzale Cadorna 5**
**I-20123 Milano(IT)**

(72) Inventor: **Vallauri, Ubaldo**
**Via Rovani, 6**
**Monza (MI)(IT)**
Inventor: **Portas, Francesco**
**Via Roma, 4**
**Quattordio (AL)(IT)**

(74) Representative: **Giannesi, Pier Giovanni et al**
**Pirelli S.p.A. Direzione Brevetti Piazzale**
**Cadorna, 5**
**I-20123 Milano(IT)**

(54) Storable coating element for electric cable joints to be applied to several cables having different diameters, in which the inner layer has a low residual deformation.

(57) The invention relates to a storable coating element for electric cable joints, to be applied to many cables having different outer diameters, comprising a tubular support (11) and a sleeve (10) fitted thereon and comprised of one or more coaxial layers at least one of which is an electrically insulating layer (10b), consisting of compounds made of polymeric cross-linked materials, which sleeve is fitted over said tubular support (11) under conditions of elastic radial expansion, wherein the sleeve layers are integrally linked to each other and only the compound of the innermost layer (10a) in the cross-linked state has a reduced instantaneous residual deformation which is substantially lower than that of the other layers (10b, 10c) located externally relative to it; conveniently the modulus of elasticity of the inner layer (10a) of the sleeve (10) is higher than that of the outer layers (10b, 10c).

Fig. 2

# STORABLE COATING ELEMENT FOR ELECTRIC CABLE JOINTS TO BE APPLIED TO SEVERAL CABLES HAVING DIFFERENT DIAMETERS, IN WHICH THE INNER LAYER HAS A LOW RESIDUAL DEFORMATION

The present invention relates to a coating sleeve for cable joints made of compounds of cross-linked polymeric material, to be applied to several different cables having different outer diameters.

In order to perform the junction of electric cable lengths to carry energy, particularly in the field of medium and high voltages the cables are uncoated at the ends. that is devoid of the respective insulating coatings and, if it is the case, the semiconductive coatings, for the purpose of exposing the conductors thereby allowing their mutual connection, and subsequently the area without the insulating coating is filled with appropriate materials and then covered with an outer coating so as to restore the required insulating characteristics in the junction area.

For the purpose a tubular coating element, hereinafter referred to as sleeve, is fitted over the junction area. The sleeve is made of cross-linked polymeric material consisting of several layers each having specific electrical features and as a whole it is designed to be elastically clamped around the surface of the insulating layer of the connected cables covering the insulating layer itself over a length thereof in the areas contiguous to the conductor junction.

The sleeve is therefore radially expanded and maintained under expanded conditions until it is put over the cable junction area; after the sleeve has been put in place its shrinkage around the cable surface is carried out, so that it exerts a pressure thereon capable of ensuring the necessary electric requirements.

In order to keep the sleeve under expanded conditions it can be made of thermoshrinkable material, a material which is capable of maintaining the expansion it has received until its shrinkage by heat is caused; however this technique requires the accomplishment of delicate operations on stocks for the installation of the sleeve because heating means such as free flames are needed in order to achieve the shrinkage of the sleeve itself.

Alternatively, the sleeve may be made of an elastic material and fitted under expanded conditions around a tubular support body which is then removed after the sleeve has been brought to the intended position around the cable junction area, which enables the sleeve to elastically shrink and be clamped around the cable insulating layer.

However, the polymeric materials to be used for the manufacture of sleeves in which each layer needs particular electrical features well known in the field generally exhibit, on the discontinuance of a status of mechanical deformation stress held for a certain period of time, an elastic return to the original size which is incomplete, that is still having an instantaneous residual deformation the degree of which depends, among other things, upon the value of the previously imposed deformation, the temperature and time of stay at the strained state; said instantaneous residual deformation decreases as time goes by and tends to become zero after a certain lapse of time, in the range of some days or months at room temperature ($\leq 30°$ C).

Due to the fact that after the coating sleeve has been fitted on the cable junction it is impossible to wait for a time sufficient to achieve said size recovery which is necessary to the correct clamping of the sleeve, the problem arises of providing a sleeve which, after being stored under expanded conditions, can still be efficiently clamped around the cables by virtue of its elastic features only.

Materials having particular properties of reduced residual deformation could be used for manufacturing the sleeve, but such materials are of difficult formulation, because the mechanical characteristics required of them can be hardly associated with the necessary electrical properties for the different layers so that it becomes difficult to manufacture a sleeve wherein all layers have an elastic behaviour exhibiting a reduced residual deformation.

Taking into account the above problem sleeves of the type described in the Italian Patent Application No. 19102 A/89 in the name of the same applicant have been manufactured, in which the use of a single sleeve size has been provided for coating cable junctions having different sizes through the employment of coating elements made at the factory and kept in an expanded condition until they are applied.

In this patent application the problem of providing the sleeve with sufficient expansion to enable it to be fitted over the cable of the greatest diameter in the group of the intended sizes while at the same time enabling it to be efficiently clamped also around the cables of the smallest size in the group has been solved by adopting for the radially outermost sleeve layer only, a material which exhibits a reduced residual deformation on discontinuance of the applied expansion stress, which material is hence adapted to act on the underlaying layers so that the whole sleeve can efficiently be clamped around the smallest cables in the intended range.

However, in order to be able to perform its function in an efficient manner, the outer layer must develop an elastic force sufficient to impose the desired shrinkage to the underlying layers and therefore it must have a particularly high modulus of elasticity and in addition its thickness must be higher than it would be necessary if only the requested electrical performance of the layer were involved; furthermore the material forming the outer layer appears to be comparatively less stressed, in the expanded state, relative to the material of the inner layers for which the use of materials possessing more reduced mechanical qualities is dictated.

The present invention aims at providing a coating sleeve for electric cable joints which can be prepared at the factory, expanded on its respective tubular support and stored as such until the moment of use and can be employed for differently sized cables while ensuring an appropriate clamping of the cables without requiring modifications in the sizes of the different layers as established on the basis of the electrical performance required thereof, and also having the possibility of disposing the material provided with the best mechanical characteristics in the area submitted to the greatest deformation stresses.

Consequently, it is an object of the present invention a storable coating element for electric cable joints, to be applied to several cables having different outer diameters, comprising a tubular support and a sleeve fitted over it and consisting of one or more coaxial layers, at least one of which is electrically insulating, made of compounds formed with polymeric cross-linked materials, which sleeve is fitted over said tubular support under conditions of elastic radial expansion, characterised in that the sleeve layers are integrally linked together and in that at an imposed expansion maintained for at least 24 months at room temperature the compound of the innermost layer exhibits, in the cross-linked state, an instantaneous residual deformation substantially lower than that of the layers located more externally relative to it.

Preferably the compound of the innermost layer at the cross-linked state exhibits an instantaneous residual deformation lower than 15% in connection with an imposed expansion of 50%, maintained for at least 24 months at room temperature or, alternatively, for at least 40 days at 65° C.

Conveniently the compound of the innermost layer has a modulus of elasticity as great as that of the layers located more externally; preferably the innermost layer has a radial thickness lower than 25% of the overall thickness of the sleeve and is formed with a compound having a modulus of elasticity as great as 1.5 times the modulus of the layers located more externally.

In a preferred embodiment the compound of the innermost layer has a modulus of elasticity included between 0.5 and 10 MPa and the compounds of the layers located more externally relative to it have a modulus of elasticity in the range of 0.03 to 6 MPa; in a more preferred embodiment the compound of the innermost layer has a modulus of elasticity included between 1 and 5 MPa and the compounds of the outer layers have a modulus of elasticity in the range of 0.5 to 3 MPa.

The sleeve layers are made of elastomeric materials having chemical affinity therebetween, preferably coextruded and/or jointly cross-linked.

It is a further object of the present invention an electric cable joint comprising an electrical and mechanical connection between the conductors of two cables and a coating sleeve for the connection itself, fitted over the connection and in contact with the insulating coatings of the cables in a condition of elastic radial expansion, which sleeve is formed with several coaxial layers one of which at least is an electrically insulating layer, consisting of compounds made of cross-linked polymeric materials, characterised in that the sleeve layers are integrally linked together and that at an imposed expansion maintained for at least 24 months at room temperature the compound of the innermost layer exhibits, in the cross-linked state, an instantaneous residual deformation substantially lower than that of the layers located more externally relative to it.

More details will become apparent from the following description of one embodiment of the invention with reference to the accompanying drawings, in which:

- Fig. 1 is a diagrammatic axial sectional view of the junction area of two cables having the coating sleeve applied thereto;
- Fig. 2 is a sectional view of the junction area of the cables shown in Fig. 1, the coating sleeve being about to be applied on the cables;
- Fig. 3 is a cross sectional view of a sleeve in accordance with the invention in a rest condition;
- Fig. 4 is a cross sectional view of the sleeve shown in Fig. 2, located under expanded conditions on the tubular support;
- Fig. 5 is a diagram showing the radial development of the percent expansion in the sleeve thickness.

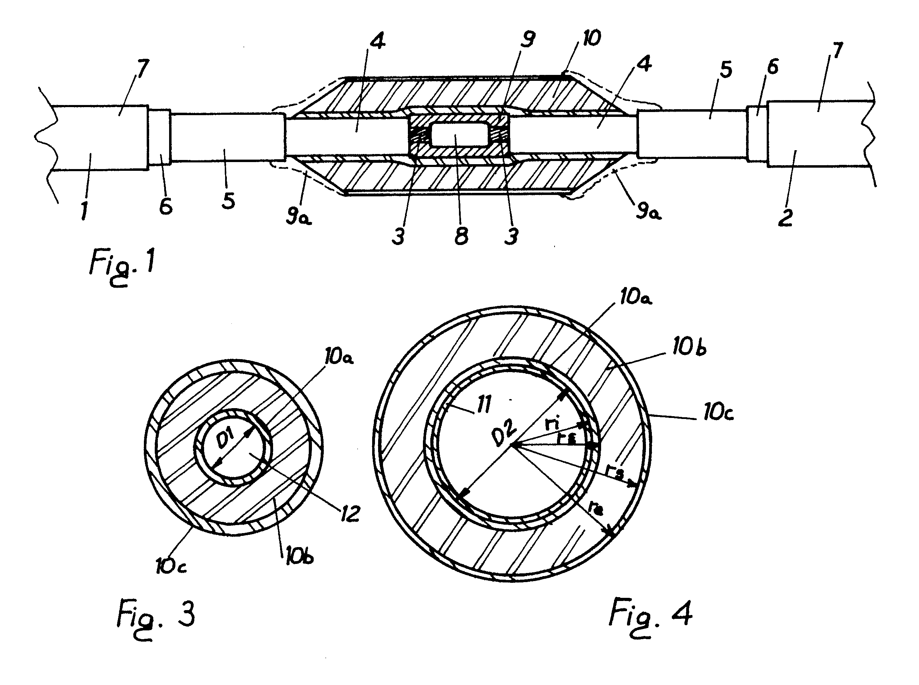

As diagrammatically shown in Fig. 1, the junction between two cables 1, 2 is made by disposing the ends of the cables to be joined in a confronting coaxial relation, the conductors 3 of the cables having been previously step-wise devoid of the respective coating layers so that they appear uncoated over a length thereof.

By the removal of the cable coating, the insulating layer 4, the semiconductive layer 5, the metal armouring 6 and the outer sheath 7 become exposed over some length thereof.

The uncoated end portions of conductors 3 are electrically connected to each other by a junction means 8.

Said electrical junction means 8, diagrammatically shown in the figure, is known per se and it may for example consists of a welding, a scarfing element or the like and therefore will not be herein further described.

The space corresponding to the lengths where the insulating layer 4 has been removed, after the conductors have been electrically connected to each other is filled with a deformable field-control filler, which is also well known in the art; a further means 9a of known type coats the ends of the covering sleeve and restores the armouring continuity, being connected to the semiconductive layer 5 of the cable.

For covering the junction area a sleeve 10 made of polymeric cross-linked material is therefore provided, which is slidably fitted over one of the cables, before its being joined to the other cable; once the electrical connection operations have been completed through the junction means 8, and the filler 9 has been applied, the sleeve is brought over the junction area and released in place so as to form a cover completely coating the uncovered lengths of the insulating layer 4.

For the purpose of being fitted over the junction area, as shown in Fig. 2, the sleeve 10 is mounted around a tubular support body 11 which keeps it in a radially expanded condition until its inner diameter becomes sufficiently wide to allow the sleeve itself and the tubular body carrying it to freely slide on the cables, at least on the portion forming the semiconductive layer 5 or, as shown, the outer sheath 7.

In order to enable the sleeve to be put around the junction, the tubular body 11, as diagrammatically shown in Fig. 2, is progressively removed using known techniques for example by axial withdrawal, so that the sleeve can elastically shrink around the cable surfaces, ejecting the air from the contact area and adhering to said surfaces, while exerting some pressure thereon in order to ensure a correct distribution of the electric field in the junction area.

Usually for medium voltage cables ($U_m \geqq 12$ KV) this pressure must be higher than a minimum value of about 0.1 MPa.

In this case the sleeve is required to have an inner diameter at rest, that is in the absence of applied stresses, lower than the outer diameter of the cable insulating layer by an amount giving rise to an elastic deformation of the sleeve corresponding to the desired clamping of said sleeve on the cables, which means in other words that the hole in the sleeve must have an interference with the insulating layer of the cable so as to remain around it under elastically deformed conditions.

The required degree of interference for developing a certain pressure value on the cable depends upon the elastic deformability of the material forming the sleeve, that is on its modulus of elasticity E and on its radial thickness; therefore these values must be selected so as to comply with the desired pressure as above stated.

The structure of a sleeve for medium voltages, of the type adapted to be applied as above stated and as shown in Figs. 1, 2 in axial section and in Fig. 3 in transverse cross sectional view, consists of several coaxial layers which, starting from the central hole 12, are comprised of an inner layer 10a, acting as a voltage divider, made of a material having a high dielectric constant $\epsilon$, an intermediate layer 10b made of insulating material and an outer layer 10c of semiconductive material.

By "material having a high dielectric constant" it is intended a material having a dielectric constant $\epsilon$ determined according to specifications ASTM D 150 higher than or equal to 6 and preferably higher than or equal to 9, whereas by "insulating material" it is meant a material having a dielectric constant $\epsilon$ according to specifications ASTM D 150 lower than 4 and volume resistivity $\geqq 10^{14}$ $\Omega$cm, determined according to the specification ASTM D257.

In order to enable the sleeves to be fitted over the tubular support body 11, they must be radially expanded so that their inner hole 12 having a diameter $D_1$ at rest, as shown in Fig. 3, will reach the diameter $D_2$ as shown in Fig. 4.

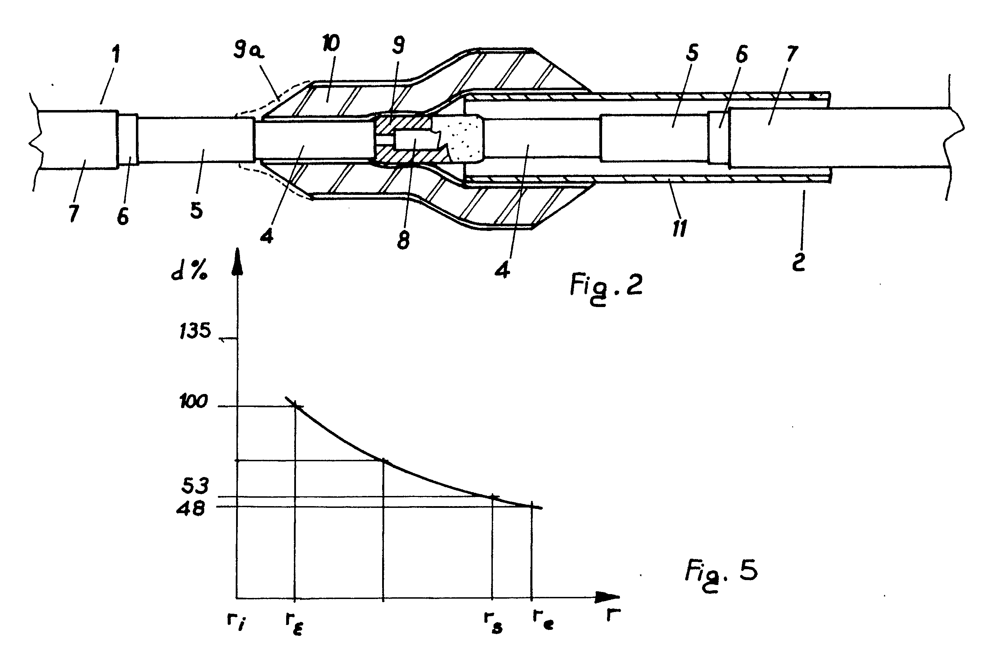

The diagram shown in Fig. 5 represents the development of the percent expansion state in the sleeve thickness at the various radial positions r, emphasising the expansion values at the inner radius $r_i$, at radius $r_e$ of the layer having high $\epsilon$, at radius $r_s$ of the insulating layer and at the outer radius $r_e$ of the sleeve.

The diagram shown in Fig. 5 has been determined taking into account an expansion of the sleeve from a starting diameter $D_1 = 17$ mm to a diameter $D_2 = 40$ mm, for a sleeve having an overall wall diameter of 15 mm.

As viewed in the diagram, the development of the percent expansion is of the hyperbolic type; it is therefore very high for the areas close to the inner radius $r_i$ of the sleeve, whereas it is remarkably reduced proceeding outwardly.

The materials used for manufacturing the sleeves are cross-linked polymeric materials, consisting of compounds selected on the basis of the required electric characteristics for each layer.

4

These materials in general do not have a perfect elastic behaviour; in fact when they are submitted to deformation they exhibit a certain degree of instantaneous residual deformation which becomes increasingly higher with the increasing of the imposed expansion.

For example, if some tubular sleeves are expanded starting from a given inner diameter and are maintained in the expanded state for a certain period of time, upon release they elastically come back to a higher diameter than the starting one, thereby keeping a deformation which is not immediately resumed, particularly if the deformed condition has been maintained for long, as in the case of the sleeves expanded at the factory and stored under an expanded condition until the moment of use, that is for some months; actually the residual deformation is subjected to decrease either partly or to zero but it takes very long periods of time, i.e. weeks or months.

Since it is desirable to be able to mount the sleeves on the tubular bodies at the factory, under checked conditions, and keep them in an expanded state on said supports until the moment of use, normally for a period of some months, the problem of the residual deformation is particularly important because this residual deformation can impair the desired clamping of the sleeve around the cable.

In order to enable the sleeve assembly to be applied to the cable junction in compliance with the requested radial-clamping conditions, according to the invention the innermost layer of the sleeve is provided to be made of a material having a reduced degree of residual deformation, lower than that of the overlying layers.

In this way the inner layer when released after the expansion, by virtue of its reduced residual deformation is capable of elastically resuming a diameter slightly higher than the starting one, which therefore ensures a good clamping on the cables, and in addition it must carry out a pulling action on the layers externally overlying it in order to make the assembly resume its original size, counteracting the residual deformation present in said outer layers.

In particular, the innermost layer, as soon as the tubular support keeping it expanded has been removed, is submitted to a spring back force the amount of which depends on its modulus of elasticity, its thickness and the value of the relative deformation imposed thereto.

The inner layer when the sleeve is fitted over the support under expanded conditions is in the highest state of deformation with respect to the other sleeve layers; therefore upon release the spring back force acting thereon is the highest of the various layers, the other conditions being equal.

Therefore, the use in this layer of a compound having a low instantaneous residual deformation, capable of elastically shrinking until the central hole reaches the diameter corresponding to the requested value for being clamped around the cable allows the desired result to be achieved, that is the return of the whole sleeve to a diameter close to the starting one, constraining the other layers to shrink although the inner layer has a relatively reduced thickness and the overlying layers exhibit a higher residual deformation.

In order to achieve the above result, giving a high spring force to the inner layer, that is the one causing the shrinkage of the whole sleeve to the desired degree, the inner layer should preferably have a modulus of elasticity not lower than that of the other layers and, more preferably, the other layers having typical sizes based on the required performance from the electrical point of view, should be higher than 1.5 times the modulus of elasticity of said other layers.

In particular the modulus of elasticity of the compounds forming the outer layers 10b, 10c can be comprised between 0.03 and 6 MPa, whereas the modulus of the compound forming the inner layer 10a is in the range of 0.5 to 10 MPa; preferably the compound used for the innermost layer has a modulus of elasticity in the range of 1 to 5 Mpa and the compounds of the outer layers have a modulus of elasticity between 0.5 and 3 MPa.

As regards the outer layers, they are in turn submitted to an expansion state which is relatively smaller on the support 11 and therefore the residual deformation of said layers, since it increasingly grows with the increasing of the imposed deformation, is at all events within values which enable it to be resumed by the returning action carried out by the inner layer.

In order that the inner layer 10a of the sleeve should be able to exert its returning action, it must be integrally linked to the external layer immediately overlying it and the latter in turn must be linked to the layer 10c in the same manner so that the layer 10a will be capable of transmitting the necessary tractive action to the outer layers enabling the clamping of the sleeve around the cable; this condition is easily complied with in the case in which the layers have chemical affinity with respect to one another and are coextruded and/or jointly cross-linked to form the sleeve.

Preferably, when sleeves are sized so as to be used for applications in the field of medium and high voltages, in which the innermost layer has a thickness lower than 25% of the overall wall thickness of the sleeve and it is wished to apply the sleeve to several different cables, selected from a group in which the diameter of the greatest cable is 1.6 times bigger than the diameter of the smallest one, the material forming the inner layer 10a is required to have an instantaneous residual deformation lower than 15%, taking into account an imposed deformation of 50% held for a period of 40 days at 65°C and determined on a flat test piece following the procedure stated by the specification UNI 7321-74.

The stated time and temperature conditions are substantially equivalent to a two years' stay at room temperature and therefore simulate in an accelerated manner the real conditions in which a sleeve expanded at the factory can be at the moment of use, after a storage period, thereby constituting an appropriate reference value for evaluating the elastic behaviour of the material.

By way of example, a sleeve in accordance with the invention, adapted to be used on medium voltage cable joints, in a cable range comprised between a diameter of 20 mm and a diameter of 32 mm for the insulating coating, taxing into account the choice of sizes based on the requested electrical performance, needs a thickness of about 2 mm for the innermost layer 10a, a thickness of 7 to 10 mm for the intermediate insulating layer 10b and a thickness of 1 to 3 mm for the outermost layer 10c.

The diameter at rest $D_1$ of the central hole in the sleeve is for example 17 mm and the sleeve expansion on the tubular support makes the sleeve reach a diameter of 40 mm.

A compound made of polymeric material susceptible of cross-linking having the stated characteristics of deformability and strength, to be used for manufacturing the inner layer 10a of a sleeve in accordance with the above example has the following composition expressed in parts by weight:

| | |
|---|---|
| - ethylene-propylene-diene terpolymer, for example the one known on the market under the name DUTRAL TER - 048 from DUTRAL S.p.A. | 100 |
| - zinc oxide | 5 |
| - lead tetroxide ($Pb_3O_4$) | 5 |
| - conductive carbon black, for example the one known on the market under the name HUBER N 990 from DEGUSSA S.p.A. | 140 |
| - paraffin plasticizer | 40 |
| - poly-1,2-dihydro-2,2,4-trimethyl quinoline | 1.5 |
| - stearic acid | 1 |
| - triallyl cyanidate | 1.5 |
| - 40% active cumene hydroperoxide | 10 |

The physical characteristics of the sleeve layer made with said compound, after cross-linking, are as follows:

| | |
|---|---|
| - tensile breaking strength | 7 MPa |
| - ultimate percent pulling elongation, at room temperature (20°C) | 610% |
| - modulus of elasticity E | 3 MPa |
| - instantaneous residual deformation at the imposed elongation cf 50% determined according to UNI specifications 7321-74 on a flat test piece, at 65°C and after a lapse of time of 960 hours | 10% |
| - dielectric constant $\epsilon$ determined according to ASTM specifications D150 | 15 |
| - volume resistivity determined according to ASTM specifications D257 | $10^{10}$ Ohm x cm |

A compound made of a polymeric material susceptible of cross-linking having the stated characteristics, to be used for making the insulating layer 10b in the example illustrated has the following composition expressed in parts by weight:

6

| | |
|---|---|
| - ethylene-propylene copolymer, for example the one known on the market under the name DUTRAL CO-054 from DUTRAL S.p.A. | 100 |
| - zinc oxide | 5 |
| - lead tetroxide (Pb$_3$O$_4$) | 5 |
| - stearic acid | 1 |
| - calcined kaolin having a surface treatment with trimethoxyethoxy vinylsilane | 70 |
| - trimethoxyethoxy vinylsilane | 1 |
| - paraffin plasticizer | 18 |
| - poly-1,2-dihydro-2,2,4-trimethyl quinoline | 1.5 |
| - mercaptobenzoimidazole | 2 |
| - triallyl cyanidate | 1.5 |
| - 40% active $\alpha,\alpha'$ -bis-(terbutyl peroxy) m p diisopropylbenzene | 5 |

The physical characteristics of the sleeve layer made with said compound, after cross-linking, are as follows:

| | |
|---|---|
| - tensile breaking strength | 7 MPa |
| - ultimate percent pulling elongation, at room temperature (20°C) | 560% |
| - modulus of elasticity E | 1.5 MPa |
| - instantaneous residual deformation at the imposed elongation of 50% determined according to UNI specifications 7321-74 on a flat test piece, at 65°C and after a lapse of time of 960 hours | 28% |
| - dielectric constant $\epsilon$ determined according to ASTM specifications D150 | 2.8 |
| - volume resistivity determined according to ASTM specifications D257 | > $10^{15}$ Ohm x cm |

For the outermost semiconductive layer 10c, an appropriate compound has the following composition expressed in parts by weight:

| | |
|---|---|
| - ethylene-propylene-diene terpolymer, for example the one known on the market under the name DUTRAL TER - 054 from DUTRAL S.p.A. | 100 |
| - zinc oxide | 5 |
| - conductive carbon black, for example the one known on the market under the name VULCAN P from CABOT S.p.A. | 80 |
| - paraffin plasticizer | 35 |
| - poly-1,2-dihydro-2,2,4-trimethyl quinoline | 1.5 |
| - stearic acid | 1 |
| - triallyl cyanidate | 1.5 |
| - 40% active cumene hydroperoxide | 7.5 |

The physical characteristics of the sleeve layer made with said compound, after cross-linking, are as follows:

| | |
|---|---|
| - tensile breaking strength | 11 MPa |
| - ultimate percent pulling elongation, at room temperature (20° C) | 520% |
| - modulus of elasticity E | 1.5 MPa |
| - instantaneous residual deformation at the imposed elongation of 50% determined according to UNI specifications 7321-74 on a flat test piece, at 65° C and after a lapse of time of 960 hours | 31% |
| - volume resistivity determined according to ASTM specifications D257 | 180 Ohm x cm |

A sleeve having the described structure can therefore be expanded over the tubular support 11 until it reaches an inner diameter of 40 mm and held at the expanded state as far as the moment of use.

Under these conditions the inner layer, having a modulus of elasticity E which is twice the modulus of the other outer layers and exhibiting an instantaneous residual deformation lower than 15% in connection with an expansion of 135%, is capable of ensuring both its spring return to a diameter of 19 mm so as to accomplish the requested interference with the cable and a returning action on the other outer layers, overcoming the tendency of the latter to stay in a state of residual deformation, which brings about the return of the assembly to the desired diameter.

Therefore, with a sleeve in accordance with the invention it is possible to obtain an appropriate clamping pressure on cables of a wide range of diameters, by using a material having a reduced residual deformation for one alone of the sleeve layers and without being obliged, for reasons of mechanical behaviour, to intervene on the choice of the thickness sizes for the sleeve layers, which sizes can therefore be determined depending on the electrical requirements only; in addition the invention enables an optimal exploitation of the spring properties of the materials used, due to the fact that the material having the best spring features, which are usually associated with the best strength properties, is located at the position concerned with the maxima stresses, whereas in less stressed areas materials having reduced mechanical qualities can be used.

Many variations can be made without departing from the scope of the present invention as defined in its general features.

## Claims

1. A storable coating element for electric cable joints, to be applied to several cables (1, 2) having different outer diameters, comprising a tubular support (11) and a sleeve (10) fitted over it and consisting of several coaxial layers, at least one (10b) of which is electrically insulating, made of compounds formed with polymeric cross-linked materials, which sleeve (10) is fitted over said tubular support (11) under conditions of elastic radial expansion, characterized in that the sleeve layers (10a, 10b, 10c) are integrally linked together and in that at an imposed expansion maintained for at least 24 months at room temperature the compound of the innermost layer (10a) exhibits, in the cross-linked state, an instantaneous residual deformation substantially lower than that of the layers (10b, 10c) located more externally relative to it.

2. A storable coating element for electric cable joints according to claim 1, characterised in that the compound of the innermost layer (10a) at the cross-linked state exhibits an instantaneous residual deformation lower than 15% in connection with an imposed expansion of 50%, maintained for at least 24 months at room temperature or, alternatively, for at least 40 days at 65° C.

3. A storable coating element for electric cable joints according to claim 1, characterised in that the compound of the innermost layer (10a) has a modulus of elasticity at least as great as that of the layers (10b, 10c) located more externally.

4. A storable coating element for electric cable joints according to claim 3, characterised in that the innermost layer (10a) has a radial thickness lower than 25% of the overall thickness of the sleeve (10) and is formed with a compound having a modulus of elasticity as great as 1.5 times the modulus of the layers located more externally (10b, 10c).

5. A storable coating element for electric cable joints according to claim 3, characterised in that the compound of the innermost layer (10a) has a modulus of elasticity included between 0.5 and 10 MPa and the compounds of the layers (10b, 10c) located more externally relative to it have a modulus of elasticity in the range of 0.03 to 6 MPa.

6. A storable coating element for electrical cable joints according to claim 5, characterised in that the compound of the innermost layer (10a) has a modulus of elasticity included between 1 and 5 Mpa and the compounds of the outer layers (10b, 10c) have a modulus of elasticity in the range of 0.5 to 3 MPa.

7. A storable coating element for electric cable joints according to claim 1, characterised in that the sleeve layers (10a, 10b, 10c) are made of elastomeric materials having chemical affinity therebetween, preferably coextruded and/or jointly cross-linked.

8. A storable coating element for electric cable joints comprising an electrical and mechanical connection (8) between the conductors (3) of two cables (1, 2) and a coating sleeve (10) for the connection (8) itself, fitted over said connection and in contact with the insulating coatings of the cables (1, 2) in a condition of elastic radial expansion, which sleeve (10) is formed with several coaxial layers (10a, 10b, 10c) one of which at least is an electrically insulating layer (10b), consisting of compounds made of cross-linked polymeric materials, characterised in that the sleeve layers (10a, 10b, 10c) are integrally linked together and that at an imposed expansion maintained for at least 24 months at room temperature the compound of the innermost layer (10a) exhibits, in the cross-linked state, an instantaneous residual deformation substantially lower than that of the layers (10b, 10c) located more externally relative to it.

9. A joint for electric cables according to claim 8, characterised in that the compound of the innermost layer (10a) of the sleeve (10) in the cross-linked state has an instantaneous residual deformation lower than 15% in connection with an imposed expansion of 50%, maintained for at least 24 months at room temperature or, alternatively, for at least 40 days at 65° C.

10. A joint for electric cables according to claim 8, characterised in that the compound of the innermost layer (10a) of the sleeve (10) has a modulus of elasticity as great as that of the layers (10b, 10c) located more externally.

11. A joint for electric cables according to claim 10, characterised in that the innermost layer (10a) of the sleeve (10) has a radial thickness lower than 25% of the overall thickness of the sleeve (10) and is formed with a compound having a modulus of elasticity as great as 1.5 times the modulus of the layers (10b, 10c) located more externally.

12. A joint for electric cables according to claim 10, characterised in that the compound of the innermost layer (10a) of the sleeve (10) has a modulus of elasticity included between 0.1 and 1.5 MPa and the compounds of the outer layers (10b, 10c) have a modulus of elasticity in the range of 0.05 to 0.5 MPa.

13. A joint for electric cables according to claim 10, characterised in that the compound of the innermost layer (10a) of the sleeve (10) has a modulus of elasticity included between 1 and 5 MPa and the compounds of the outer layers (10b, 10c) have a modulus of elasticity in the range of 0.5 to 3 MPa.

14. A joint for electrical cables according to claim 10, characterised in that the sleeve layers (10a, 10b, 10c) are made of elastomeric materials having chemical affinity therebetween. preferably co-extruded and/or jointly cross-linked.

Fig. 1

Fig. 3

Fig. 4

EP 0 422 567 A2

Fig. 2

Fig. 5

EP 0 422 567 A2